# EUROPÄISCHE PATENTSCHRIFT

(11) **EP 3 788 250 B1**
(45) Veröffentlichungstag und Bekanntmachung des Hinweises auf die Patenterteilung: **05.11.2025**
(21) Anmeldenummer: 19729486.1
(22) Anmeldetag: 04.06.2019
(51) Int. Cl.: F02M 61/18, B23K 26/386

(54) **VERFAHREN ZUM FERTIGEN EINER DÜSE**
METHOD FOR PRODUCING A NOZZLE
PROCÉDÉ POUR LA FABRICATION D'UNE BUSE

(30) Priorität: 06.06.2018 DE 102018113508
(43) Veröffentlichungstag der Anmeldung: 10.03.2021
(73) Patentinhaber: Liebherr-Components Deggendorf GmbH, 94469 Deggendorf (DE)
(72) Erfinder: LICHTINGER, Klaus, 94333 Geiselhöring (DE); PIRKL, Richard, 93055 Regensburg (DE); PREIS, Alexander, 94209 Regen (DE)
(74) Vertreter: Laufhütte, Dieter
(86) Internationale Anmeldenummer: PCT/EP2019/064463
(87) Internationale Veröffentlichungsnummer: WO 2019/234005

(56) Entgegenhaltungen:
- WO-A1-00/09884
- DE-A1- 102013 204 809
- GB-A- 2 537 834
- US-A1- 2016 237 970

## Beschreibung

Die vorliegende Erfindung betrifft eine Düse zum Einspritzen von Kraftstoff.

In Brennkraftmaschinen wie Dieselmotoren oder auch Benzinmotoren wird in der Regel über einen Injektor Kraftstoff mit einer bestimmten Menge und für eine bestimmte Zeitdauer in einen Brennraum eingespritzt. Dabei ist es aufgrund der sehr geringen Einspritzdauern, die im Mikrosekunden-Bereich liegen, erforderlich, die Austrittsöffnung der Düse mit einer sehr hohen Frequenz zu öffnen bzw. zu schließen.

Da dem Fachmann das Funktionsprinzip eines Injektors bekannt ist, wird nachfolgend nur kurz auf einige Aspekte eingegangen, die für das grundlegende Verständnis der Erfindung von Vorteil sind.

Ein Injektor verfügt typischerweise über eine Düsennadel (auch: Injektornadel), die einen mit einem hohen Druck beaufschlagten Kraftstoff bei Freigeben eines Austrittslochs des Injektors nach Außen treten lässt. Diese Düsennadel wirkt im Zusammenspiel mit dieser Austrittsöffnung wie ein Pfropfen, so dass bei einem Anheben ein Austreten des Kraftstoffs ermöglicht wird. Demnach ist es also erforderlich, diese Nadel in relativ kurzen Zeitabständen anzuheben und nach einer kurzen Zeit erneut in die Austrittsöffnung zurückgleiten zu lassen. Dabei können hydraulische Servoventile verwendet werden, die das Auslösen dieser Bewegung ansteuern. So gelingt es, die erforderliche Kraftstoffmenge zu den gewünschten Zeitpunkten in den Brennraum zu fördern.

Aus dem Stand der Technik ist bekannt, die sehr kleinen Bohrungen der Spritzlöcher mit einem Erodierprozess zu fertigen.

Weitergehende Untersuchungen haben gezeigt, dass die Oberflächenbeschaffenheit (insbesondere die Rauheit) von Düsen-Spritzlöchern eine große Auswirkung auf das Emmissionsverhalten der mit der Düse zusammenwirkenden Brennkraftmaschine hat. Dabei haben sehr glatte Löcher einen Vorteil und liefern einen bedeutenden Beitrag zu geringeren Emmisionswerten. Daher werden die typischerweise mit einem Erodierprozess gefertigten Spritzlöcher hydroerosiv verrundet. Dabei wird eine mit Schleifpartikeln versetzte abrasive Flüssigkeit unter hohem Druck (bis zu 120 bar) durch die Spritzlöcher gepumpt, wodurch eine gewisse Glättung der erodierten Spritzlöcher erreicht wird.

Aus den vorgenannten Gründen gibt es seit langem Bestrebungen, die Spritzlöcher mittels Laserbohrung zu erzeugen, da dies zu einer deutlich glatteren Oberfläche als der Erodierprozess mit anschließendem hydroerosiven Verrunden führt. Weitere Vorteile ergeben sich hinsichtlich der Taktzeit, möglichen kleineren Bohrungen, einem geringeren Wärmeeintrag in Oberflächen, der Tatsache, dass kein Verbrauchsmaterial benötigt wird und einer insgesamt besseren Reproduzierbarkeit der Löcher.

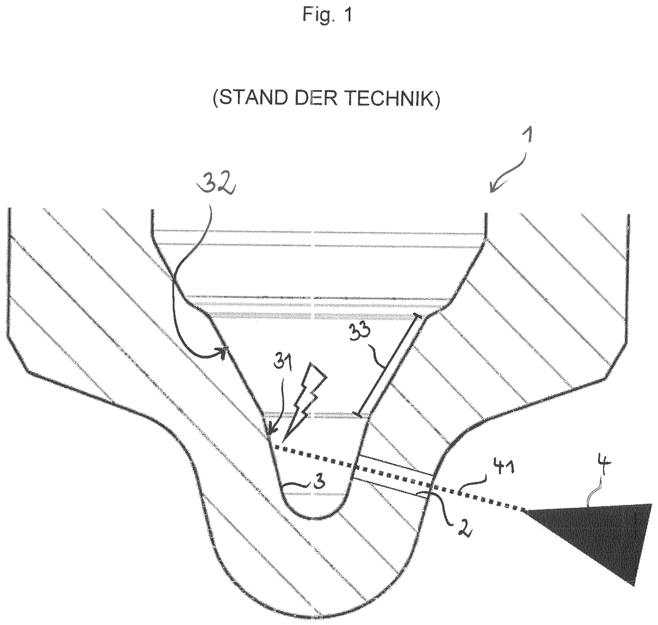

Problematisch hierbei ist, dass beim Laserbohren des Spritzlochs der Laser unmittelbar nach Eindringen in das Sackloch einer Düse zu deaktivieren ist, da ansonsten die gegenüberliegende Sacklochwand vom Laser beschädigt wird. Eine grafische Darstellung dieser Situation findet sich in der Fig. 1.

Die US 2016/0237970 A1 und auch die GB 2 537 834 A offenbaren dabei einen Ablauf, bei dem zuerst das Sprühloch und im Nachgang dazu das Sackloch einer Sacklochdüse gefertigt wird.

Außerdem kann es erforderlich sein, das Spritzloch so zu fertigen, dass der Laser erst das komplette Loch durchdringt und es anschließend durch eine kreis- oder schneckenförmige Bewegung vergrößert.

Da es jedoch regelmäßig nicht gelingt, den Laser ausreichend schnell und präzise zu deaktivieren, ist es erforderlich, die gegenüberliegende Sacklochwand abzuschirmen, um Beschädigungen durch den Laser zu verhindern. Dieser Vorgang wird in Fachkreisen auch "Back-Wall-Protection" genannt.

Es ist das Ziel der vorliegenden Erfindung, die vorstehend beschriebene Fertigung von Spritzlöchern mittels Laserbohrung zu vereinfachen. Dies gelingt bei Durchführung sämtlicher Verfahrensschritte aus dem Anspruch 1.

Da nach der Erfindung nun zuerst die Spritzlöcher lasergebohrt werden und nachfolgend das die Düse aushöhlende Loch gefertigt wird, kann keine Schädigung der gegenüberliegenden Wand entstehen. Diese wird erst mit Fertigung des aushöhlenden Lochs geschaffen.

Demzufolge ist es möglich, auf sämtliche Schutzmechanismen für die Sacklochwand zu verzichten. Gleichzeitig ist dabei die Bohrtiefe der Spritzlöcher durch den Laser einer bedeutend geringeren Toleranz unterworfen, da sich der Bohrboden, also die in der Düse befindende Stirnfläche der Laserbohrung, optimaler Weise in dem darauffolgend zu entfernenden Bereich (dem die Düse aushöhlenden Loch) befindet.

Dem Fachmann ist klar, dass es unterschiedliche Ausformungen der Spitze des Injektors gibt. Bei der erfindungsgemäßen Sitzlochdüse werden die Düsenlöcher direkt von dem Ventilglied (Düsennadel) verschlossen.

Bei der nicht von der Erfindung umfassten Sacklochdüse ist unterhalb des Düsensitzes ein Restvolumen (im Sackloch) vorgesehen, in dem ein Rest Kraftstoff verbleibt, der nicht durch die Düsenlöcher eingespritzt wurde. Dies kann eine erhöhte Emission an unverbrannten Kraftstoffelementen im Abgas und eine höhere Neigung der Düse zum Verkoken zur Folge haben. Allerdings kann man durch ein den Düsenlöchern vorgelagertes Mischvolumen günstigere Strömungsverhältnisse erreichen.

Vorzugsweise ist das die Düse aushöhlende Loch dazu ausgelegt, eine Düsennadel und/oder eine Düsennadelspitze aufzunehmen. Durch eine Bewegung der Düsennadel bzw. der Düsennadelspitze in Längsrichtung des Injektors kann ein Fluidpfad zwischen unter hohem Druck stehenden Kraftstoff und dem Spritzloch gebildet werden.

Das die Düse aushöhlende Loch kann verschiedene Formen haben, z.B. kann das Loch konisch oder zylindrisch sein.

Nach einer optionalen Modifikation kann vorgesehen sein, dass das die Düse aushöhlende Loch mittels einer Bohrung oder einer konventionellen Bohrung erzeugt wird.

Vorzugsweise umfasst das mittels Laserbohrung erzeugte Spritzloch eine Bohrwand und einen Bohrboden, wobei durch das Fertigen des den Injektor aushöhlenden Lochs der Bohrboden des Spritzlochs entfernt wird.

Die Laserbohrung erzeugt ein Loch, das eine koaxial zur Bohrachse angeordnete Bohrwand und einen die Bohrwand verbindenden Bohrboden umfasst. Der Bohrboden stellt dabei die an der Stirnseite der Bohrung angeordnete Angriffsfläche des Lasers dar, welche mit fortschreitendem Materialabtrag tiefer in den Injektor eindringt.

Nach einer bevorzugten Ausführung der Erfindung ist der Injektor ein Injektor zum Einspritzen von Kraftstoff, also eine Kraftstoffeinspritzdüse, insbesondere zum Einspritzen von Diesel, also eine Dieseleinspritzdüse. Die Vorteile einer glatten Spritzlochfläche finden besonders stark Niederschlag bei Dieseleinspritzdüsen.

Nach der Erfindung kann ebenfalls vorgesehen sein, dass vor dem Fertigen des die Düse aushöhlenden Lochs, mehrere Spritzlöcher mittels Laserbohrung erzeugt werden.

Demzufolge ist auch möglich, dass durch das Fertigen des den Injektor aushöhlenden Lochs, die mehreren Bohrböden der jeweiligen Spritzlöcher entfernt werden.

Nach einer optionalen Modifikation der vorliegenden Erfindung schließt die Bohrachse des Spritzlochs mit der Normalenebene der Längsausdehnung des Injektors einen Winkel ein, der 65°, vorzugsweise 35°, bevorzugterweise 20° nicht übersteigt. Bei bestimmten Düsen ist auch ein Winkel größer 65° möglich. Von Vorteil ist dabei auch ein Winkel der 50° nicht übersteigt.

Die Anordnung des Spritzlochs in den vorstehend genannten Winkelbereichen ist für eine optimale Verteilung des abgegebenen Kraftstoffs umso besser je geringer die Abweichung der Bohrachse aus der Normalenebene der Längsausdehnung des Injektors ist.

Die vorliegende Erfindung betrifft zudem einen Injektor zum Einspritzen von Kraftstoff, der nach einem der vorhergehenden Ansprüche gefertigt worden ist.

Weitere Einzelheiten, Merkmale und Vorteile der Erfindung werden anhand der nachfolgenden Figurenbeschreibung ersichtlich. Dabei zeigen:
- Fig. 1:: eine Schnittansicht einer Düsenspitze während eines Fertigungsverfahrens nach dem Stand der Technik,
- Fig. 2:: eine Schnittansicht einer Düsenspitze während eines ersten Fertigungsschritts nach der vorliegenden Erfindung, und
- Fig. 3:: eine Schnittansicht einer Düsenspitze während eines dem ersten Fertigungsschritt nachfolgenden weiteren Fertigungsschritt nach der vorliegenden Erfindung.

Fig. 1 zeigt eine Schnittansicht einer Spitze einer Düse 1 zum Einspritzen von Kraftstoff.

Wie bereits im einleitenden Teil der Beschreibung erläutert, ist es nach dem Stand der Technik üblich, das Spritzloch 2 mit Hilfe eines Lasers 4 zu bohren. Dabei kann nach Durchtritt des Laserstrahls 41 der gegenüberliegende Bereich 31 des Sacklochs 3 beschädigt werden. Grafisch dargestellt ist diese Beschädigung mit dem Blitz-Symbol. Eine solche Beschädigung gilt es unbedingt zu vermeiden, da ansonsten der Injektor unbrauchbar wird. An das Sackloch 3 schließt sich dabei ein etwa trichterförmiger Bereich 32 an, der sich von der Spitze der Düse weg nach oben hin aufweitet. Dieser Bereich kann auch zylindrisch ausgeformt sein. Dies ist der Sitzbereich 33 der Düsennadel, der im Zusammenspiel mit der Düsennadel eine Fluidverbindung von unter hohem Druck stehenden Kraftstoff (und damit das Ausgeben von Kraftstoff durch die Düse) unterbrechen oder zulassen kann.

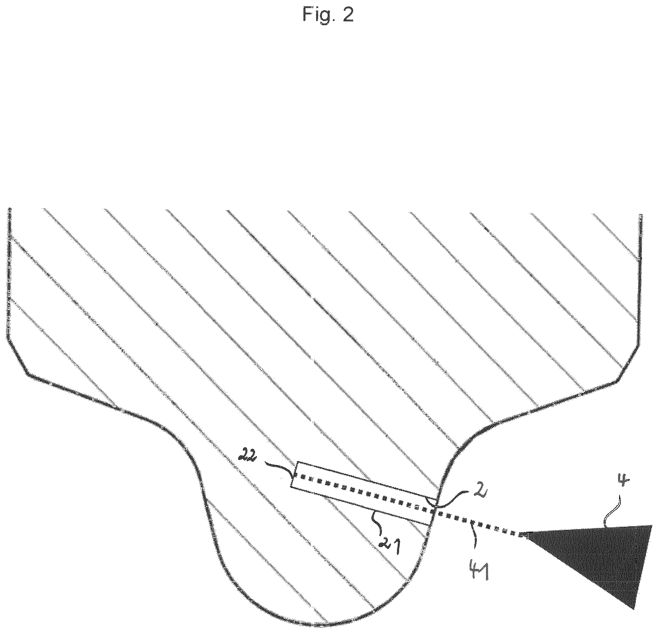

Fig. 2 zeigt einen ersten Schritt zum Fertigen einer Düse 1 nach der Erfindung. Dabei wird nun in den Düsenrohling bzw. einer Düse, dessen Sackloch und/oder Sitzfläche noch nicht gefertigt ist, das mindestens eine Spritzloch 2 durch Laserbohren gefertigt. Das durch den Laser 4 erzeugte Loch weist eine Bohrwand 21 und einen Bohrboden 22 auf. Der Bohrboden 22 ist dabei der vom Laserstrahl 41 abzutragende Bereich.

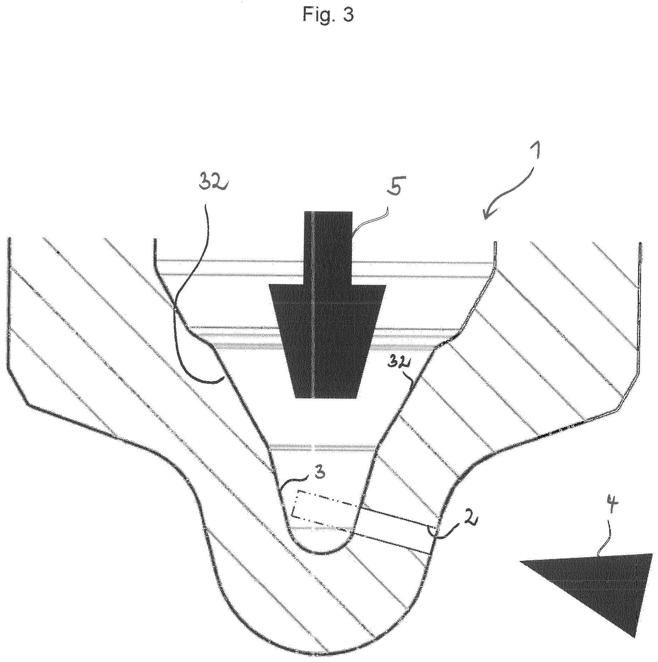

Fig. 3 zeigt einen Fertigungsschritt, der dem Erzeugen des mindestens einen Spritzlochs 2 nachfolgt. Dabei wird mit Hilfe eines Bohrers 5 das Sackloch 3 der Düse 1 erzeugt. Gestrichelt wird die im vorausgehenden Schritt mittels Laser 4 eingeprägte Bohrung gezeigt, die in einem zum Bohrboden 22 laufenden Abschnitt durch die Sacklocherzeugung teilweise entfernt worden ist.

Es müssen keine Maßnahmen ergriffen werden, um die dem Laser gegenüberliegende Seite 31 des Sacklochs 3 vor einem ungewünschten Einwirken des Lasers 4 zu schützen, da das Sackloch 3 erst nach dem Laserbohren des Spritzlochs 2 gebohrt wird.

## Patentansprüche

1. Verfahren zum Fertigen eines Injektors mit einer Sitzlochdüse (1) zum Einspritzen von Kraftstoff, wobei in dem Verfahren:
ein Spritzloch (2) der Düse (1) zum Ausgeben von Kraftstoff mittels Laserbohrung erzeugt wird, und
ein die Düse (1) entlang seiner Längsausdehnung aushöhlendes Loch (3) derart gefertigt wird, dass eine in das Loch (3) eingeführte Düsennadel das Spritzloch in einem der Länge nach konisch ausgeformten Bereich des Lochs (3) direkt verschließt, wobei
das den Injektor (1) aushöhlende Loch (3) nach dem Erzeugen des Spritzlochs (2) gefertigt wird.

2. Verfahren nach einem der vorhergehenden Ansprüche, wobei das die Düse (1) aushöhlende Loch (3) mittels einer Bohrung oder einer konventionellen Bohrung erzeugt wird.

3. Verfahren nach einem der vorhergehenden Ansprüche, wobei das mittels Laserbohrung erzeugte Spritzloch (2) eine Bohrwand (21) und einen Bohrboden (22) umfasst, und durch das Fertigen des die Düse (1) aushöhlenden Lochs (3) der Bohrboden (22) des Spritzlochs (2) entfernt wird.

4. Verfahren nach einem der vorhergehenden Ansprüche, wobei die Düse (1) eine Düse (1) zum Einspritzen von Diesel ist.

5. Verfahren nach einem der vorhergehenden Ansprüche, wobei vor dem Fertigen des die Düse (1) aushöhlenden Lochs (3), mehrere Spritzlöcher (2) mittels Laserbohrung erzeugt werden.

6. Verfahren nach Anspruch 5, wobei durch das Fertigen des die Düse (1) aushöhlenden Lochs (3), die mehreren Bohrböden (22) der jeweiligen Spritzlöcher (2) entfernt werden.

7. Verfahren nach einem der vorhergehenden Ansprüche, wobei die Bohrachse des Spritzlochs (2) mit der Normalenebene der Längsausdehnung der Düse (1) einen Winkel einschließt, der 65°, vorzugsweise 35°, bevorzugterweise 20° nicht übersteigt.

## Claims

1. Method of producing an injector with a nozzle (1) having an orifice seat for injecting fuel, wherein in said method:
an orifice (2) of the nozzle (1) for discharging fuel is produced by means of laser drilling, and
a hole (3) hollowing out the nozzle (1) along its longitudinal extent is produced in such a way that a nozzle needle introduced into the hole (3) directly closes the injection orifice in a region of the hole (3) which is conically deformed along its length, wherein the hole (3) hollowing out the injector (1) is produced after the production of the injection orifice (2).

2. Method according to any one of the preceding claims, wherein the hole (3) hollowing out the nozzle (1) is produced by means of a bore or by means of a conventional bore.

3. Method according to any one of the preceding claims, wherein the orifice (2) produced by means of laser drilling comprises a drilling wall (21) and a drilling base (22), and the drilling base (22) of the orifice (2) is removed by the production of the hole (3) hollowing out the nozzle (1).

4. Method according to any one of the preceding claims, wherein the nozzle (1) is a nozzle (1) for injecting diesel.

5. Method according to any one of the preceding claims, wherein a plurality of orifices (2) are produced by means of laser drilling before the production of the hole (3) hollowing out the nozzle (1).

6. Method according to claim 5, wherein the plurality of drilling bases (22) of the respective orifices (2) are removed by the production of the hole (3) hollowing out the nozzle (1).

7. Method according to any one of the preceding claims, wherein the drilling axis of the orifice (2) forms with the normal plane of the longitudinal extent of the nozzle (1) an angle that does not exceed 65°, preferably 35°, more preferably 20°.

## Revendications

1. Procédé de fabrication d'un injecteur avec une buse (1) à siège perforé pour injecter du carburant, dans lequel, dans le procédé, :
un siège perforé (2) de la buse (1) destinée à distribuer du carburant est produit au moyen d'un perçage au laser, et
un trou (3) d'évidement de la buse (1) le long de son extension longitudinale est fabriqué de telle manière qu'un pointeau de buse introduit dans le trou (3) ferme directement le trou d'injection dans une zone du trou (3) déformée coniquement selon la longueur, dans lequel
le trou d'évidement (3) de l'injecteur (1) est fabriqué après la production du trou d'injection (2).

2. Procédé selon l'une des revendications précédentes, dans lequel le trou (3) d'évidement de la buse (1) est produit au moyen d'un perçage ou d'un perçage conventionnel.

3. Procédé selon l'une des revendications précédentes, dans lequel le trou d'injection (2) produit au moyen d'un perçage au laser comprend une paroi de perçage (21) et un fond de perçage (22), et le fond de perçage (22) du trou d'injection (2) est éliminé par la fabrication du trou d'évidement (3) de la buse (1).

4. Procédé selon l'une des revendications précédentes, dans lequel la buse (1) est une buse (1) d'injection de diesel.

5. Procédé selon l'une des revendications précédentes, dans lequel plusieurs trous d'injection (2) sont produits au moyen d'un perçage au laser avant la fabrication du trou d'évidement (3) de la buse (1).

6. Procédé selon la revendication 5, dans lequel les nombreux fonds de perçage (22) des trous d'injection (2) respectifs sont éliminés par la fabrication du trou d'évidement (3) de la buse (1).

7. Procédé selon l'une des revendications précédentes, dans lequel l'axe de perçage du trou d'injection (2) forme avec le plan normal de l'extension longitudinale de la buse (1) un angle qui ne dépasse pas 65°, de préférence 35°, de manière préférée 20°.
